# EUROPÄISCHE PATENTSCHRIFT

(11) **EP 3 948 446 B1**
(45) Veröffentlichungstag und Bekanntmachung des Hinweises auf die Patenterteilung: **18.11.2026**
(21) Anmeldenummer: 20713608.6
(22) Anmeldetag: 23.03.2020
(51) Int. Cl.: G05B 19/042, G05B 19/418

(54) **GENERIERUNG UND VERTEILUNG VON KONFIGURATIONS-DATENSTRUKTUREN FÜR STEUERUNGSSYSTEME**
GENERATING AND DISTRIBUTING CONFIGURATION DATA STRUCTURES FOR CONTROL SYSTEMS
GÉNÉRATION ET DISTRIBUTION DE STRUCTURES DE DONNÉES DE CONFIGURATION POUR DES SYSTÈMES DE COMMANDE

(30) Priorität: 01.04.2019 DE 102019204585
(43) Veröffentlichungstag der Anmeldung: 09.02.2022
(73) Patentinhaber: Wago Verwaltungsgesellschaft mbH, 32423 Minden (DE)
(72) Erfinder: GAUS, Thomas, 78737 Fluorn-Winzeln (DE)
(74) Vertreter: Bardehle Pagenberg Partnerschaft mbB Patentanwälte Rechtsanwälte
(86) Internationale Anmeldenummer: PCT/EP2020/057968
(87) Internationale Veröffentlichungsnummer: WO 2020/200877

(56) Entgegenhaltungen:
- EP-A1- 2 960 841
- WO-A1-2019/017830
- DE-A1- 102016 120 972
- US-A1- 2015 372 865

## Beschreibung

### 1. Technisches Gebiet

Die vorliegende Erfindung betrifft ein Verfahren zum Konfigurieren eines Steuerungssystems einer Automatisierungsanlage mittels einer Konfigurations-Datenstruktur.

### 2. Technischer Hintergrund

Automatisierungstechnik wird insbesondere zur Steuerung von industriellen Anlagen, Gebäuden sowie von Verkehrsmitteln eingesetzt. Im Kontext der Automatisierungstechnik nimmt die Anbindung von Steuerungssystemen (z. B. WAGO Steuerungen) an eine Cloud-Infrastruktur (z. B. WAGO Cloud, Microsoft Azure, Amazon Web Services, IBM Cloud, SAP Cloud, etc.) immer größere Bedeutung an. Solche Steuerungssysteme kommen insbesondere im Bereich der industriellen Automation oder im Zusammenhang mit der Automatisierung von Gebäuden zum Einsatz.

Die Anbindung von Steuerungssystemen an eine Cloud-Infrastruktur ist aktuell ein Prozess, welcher manuell durch Fachleute durchgeführt werden muss. Der Prozess ist fehleranfällig und benötigt längere Zeit. Pro Steuerungssystem müssen typischerweise etliche System-Funktionen eingerichtet werden. Fehlende oder falsche Einstellungen können dabei unter anderem zu fehlerhaften oder ausbleibenden Alarmen, etc. führen.

Ferner müssen auf der Seite der angebundenen Cloud-Infrastruktur die benötigten Cloud-Funktionen eingerichtet werden. Hierzu zählen beispielsweise passende Benutzeroberfläche in Form von sogenannten Dashboards.

Aber nicht nur bei der Anbindung, sondern auch im laufenden Betrieb sind gelegentlich Änderungen an der Konfiguration notwendig, welche bei einer großen Anzahl von Steuerungssystemen mit entsprechendem Aufwand verbunden sind.

Gerade in der Gebäudeautomation kommen häufig eine Vielzahl von vergleichbaren Steuerungssystemen mit ähnlichen Aufgaben zum Einsatz, welche auch gleiche oder ähnliche Konfigurationen benötigen. In diesem Fall kann ein Einsatz von Templates zum Konfigurieren von ähnlichen Steuerungssystemen vorteilhaft sein, um Konfigurationsaufwand zu sparen.

Aus der US 8,775,626 B2 ist die Verwendung von Templates für Cloud-basierte Ressourcen bekannt. Die Templates dienen zum Speichern von Cloud-Konfigurationsinformationen an einem zentralen Ort und unterstützen das automatisierte Deployment von Ressourcen in einem Cloud-System.

Aus der US 9,128,472 B2 sind Cloud-Templates im industriellen Kontext bekannt. Das Patent beschreibt sowohl einen Aufbau von Cloud-Templates selbst, als auch einen Aufbau des Gesamtsystems. Die US 9,568,909 B2 baut auf der US 9,128,472 B2 auf und beschreibt sogenannte *"Cloud Dashboard Templates".*

Aus der EP 3,349,081 A1 ist unter anderem ein Verfahren zur automatischen Konfiguration von Funktionseinheiten eines Automatisierungssystems bekannt. Dies wird erreicht, indem die einer Automatisierungslösung zugeordneten Agenten ihre Umgebung erfassen (lokal erreichbare Geräte, Datenquellen, etc.) und eine entsprechende Geräteliste erstellen. Diese wird dann mit einer in der Cloud befindlichen Anlagenkonfiguration verglichen. Bei einer Übereinstimmung werden anschließend die Konfigurationsdaten an den jeweiligen Agenten übertragen.

In dem Artikel *"*How to Use the Cloud to Store and Distribute Manufacturing Data" (18. September 2017, International Society of Automation) werden Vorteile im Kontext von "Prebuilt Templates*"* beschrieben, welche das Deployment neuer Cloud-Ressourcen (z. B. Speicher, virtuelle Server) vereinfachen.

Aus der EP 2 960 841 A1 ist ein Knoten eines industriellen Automatisierungsnetzwerks bekannt, der ein oder mehrere Industrie-Automatisierungsgeräte aufweist und ein Gateway, das in Kommunikation mit einer Cloud-Automatisierungseinrichtung steht. Das Gateway ist eingerichtet eine aktuelle Konfiguration des Gateways zu ermitteln und ein Konfigurationsupdate von der Cloud-Automatisierungseinrichtung anzufordern.

Ein zu der EP 2 960 841 A1 ähnliches Gateway ist aus der US 2015/0372865 A1 bekannt.

Aus der WO 2019/017830 A1 ist ein Verfahren zum Konfigurieren eines industriellen Automatisierungssystems bekannt, damit Internet-of-Things möglich ist. Hierbei stellt ein Benutzer, bevorzugt per drag-and-drop, auf einem Computer ein funktionales Objekt, ein Cloud Objekt und ein Benutzerterminal-Objekt zusammen, um ein virtuelles Modell des Automatisierungssystems zu entwerfen.

Aus der DE 10 2016 120 972 A1 ist eine Rahmenapplikation für eine Gerätezugriffssoftware bekannt, die auf einem Host installierbar ist und die für Feldbuskomponenten entsprechende Treiber aufweist, die für einen Zugriff auf eine zugehörige Feldbuskomponente eines Feldbusnetzwerkes ausgelegt sind.

Aufgabe der vorliegenden Erfindung ist es, die bereits bekannten Konzepte zum Cloudbasierten Verwalten von Steuerungssystemen in einer Automatisierungsanlage weiterzuentwickeln, um die Konfiguration von Steuerungssystemen insbesondere einfacherer, schneller, sicherer und/oder effizienter zu gestalten.

### 3. Zusammenfassung der Erfindung

Die Erfindung betrifft ein Verfahren zum Konfigurieren eines Steuerungssystems einer Automatisierungsanlage mittels einer Konfigurations-Datenstruktur entsprechend dem unabhängigen Anspruch 1. Vorteilhafte Ausführungsformen der Erfindung sind in den Unteransprüchen beschrieben.

In einem ersten Aspekt der vorliegenden Erfindung wird ein Verfahren zum Konfigurieren eines Steuerungssystems einer Automatisierungsanlage bereitgestellt, das die folgenden Schritte umfasst: Erzeugen einer ersten Konfigurations-Datenstruktur für ein erstes Steuerungssystem einer Automatisierungsanlage, wobei das erste Steuerungssystem auch als ein erster Teilnehmer der Automatisierungsanlage bezeichnet werden kann. Das Steuerungssystem führt Steuerungsfunktionen der Automatisierungsanlage durch. Die erste Konfigurations-Datenstruktur umfasst eine Cloud-Komponente und eine System-Komponente und ist daher zweiteilig aufgebaut. Die Cloud-Komponente weist wenigstens eine Cloud-Funktion auf, die auf einer Cloud-Recheneinheit in einem Cloud-System ausgeführt wird; und die System-Komponente weist wenigstens eine System-Funktion auf, die auf dem ersten Steuerungssystem ausgeführt wird. Die Konfigurations-Datenstruktur wird von der Cloud-Recheneinheit erzeugt, die auch als ein zweiter Teilnehmer der Automatisierungsanlage bezeichnet wird.

Die Konfigurations-Datenstruktur kann insbesondere für einen bestimmten Anwendungsfall geeignet sein, beispielsweise für ein Steuerungssystem im Kontext von Aufgaben in Bürogebäuden, in Discountern, in der Wasseraufbereitung, in der industriellen Automation, etc.

Vorteilhaftweise kann die Cloud-Komponente ferner Anzeigenamen, Datenformatierungen, Einheiten, Schwellwerte, Berechtigungsinformationen, vordefinierte Visualisierungen (die mit Datenpunkten verbunden sind), statistische Auswertungen, einen Steuerungssystem-Zustand, Metainformationen, Alarmkonfigurationen, Konfigurationen von Aggregatbildungen, Definitionen von zusätzlichen Berechnungen, Berechtigungen von Anwendern, Algorithmen zur Datenanalyse, Datenexportdefinitionen, VPN-Konfigurationen, Backup-/ Restore-Informationen, Diagnose-Informationen und/oder Definitionen von Regeln umfassen.

Die System-Komponente umfasst ferner vorteilhafterweise Informationen über eine Datensammelfrequenz, Informationen über eine Datenübertragungsfrequenz, Informationen über eine Datenübertragungsart, Informationen über eine Art von gesendeten Daten, Konfiguration eines SPS-Programms, Visualisierungskomponenten, Firmwareversionen, Backup- und Diagnose-Einstellungen, Einstellungen ob Daten komprimiert oder unkomprimiert gesendet werden sollen, Einstellungen über mögliche Voraggregationen oder Filterungen von Daten, Einstellungen über eine Skalierung und/oder Umrechnung von Werten, und/oder Informationen über angebundene Sensorik / Aktorik.

Im Gegensatz zum Stand der Technik ist, wie oben erwähnt, die Konfigurations-Datenstruktur erfindungsgemäß zweiteilig aufgebaut. Diese Zweiteilung in eine Cloud-Komponente und eine System-Komponente und die damit verbundene Modularisierung hat eine Reihe technischer Vorteile:
Beispielsweise kann eine Cloud-Funktion der Cloud-Komponente ein Dashboard bereitstellen, um Informationen des Steuerungssystems anzuzeigen, damit ein Benutzer (z. B. ein Systemverwalter der Automatisierungsanlage) auf der Cloud-Seite alle angeschlossenen Steuerungssysteme überwachen und kontrollieren kann. Die Cloud-Funktion mit dem Dashboard unterschiedlicher Steuerungssysteme können mit einer einheitlichen Datenstruktur aufgebaut werden, damit auf der Cloud-Seite eine einheitliche Benutzeroberfläche eingerichtet werden kann, um Informationen von unterschiedlichen Steuerungssystemen anzuzeigen.

Zum Konfigurieren eines Steuerungssystems wird eine Konfigurations-Datenstruktur an das Steuerungssystem geschickt. Das Steuerungssystem kann einerseits die System-Komponente übernehmen und anderseits die Cloud-Komponente beibehalten und weiterverwenden, um eine neue Konfigurations-Datenstruktur zu erzeugen. Die neu erzeugte Konfigurations-Datenstruktur kann beispielsweise zum Konfigurieren eines ähnlichen Steuerungssystems eingesetzt werden, wobei die neu erzeugte Konfigurations-Datenstruktur direkt an das ähnliche Steuerungssystem oder über das Cloud-System an das ähnliche Steuerungssystem verschickt werden kann.

Dieser Einsatz ist besonders vorteilhaft, wenn z. B. ein Steuerungssystem initial durch Erhalten einer Konfigurations-Datenstruktur konfiguriert wird und später im Betrieb neue Einstellungen übernommen hat (z. B. durch eine direkte Änderung an dem Steuerungssystem von einem Benutzer). Das Steuerungssystem kann dann basierend auf der neuen Konfiguration eine neue System-Komponente erzeugen und diese an das Cloud-System schicken, und das Cloud-System kann die System-Komponente mit einer Cloud-Komponente zusammenpacken, um eine neue Konfigurations-Datenstruktur zu erzeugen. Zusätzlich oder alternativ kann das Steuerungssystem die Cloud-Komponente einer vorher erhaltenen Konfigurations-Datenstruktur verwenden und eine neue System-Komponente zusammen mit der Cloud-Komponente verpacken und selbst eine neue Konfigurations-Datenstruktur erzeugen. Die neue Konfigurations-Datenstruktur kann dann zum Konfigurieren eines ähnlichen Steuerungssystems angewendet werden. Dadurch muss nicht für jedes Steuerungssystem eine neue Konfigurations-Datenstruktur erzeugt werden.

Steuerungssysteme können neben ihren eigentlichen Steuerungsaufgaben auch Gateway-Funktionalitäten umfassen. Erfindungsgemäß erhält das zweite Steuerungssystem die erste Konfigurations-Datenstruktur von dem Cloud-System und sendet sie dann an das erste Steuerungssystem weiter. Somit muss nicht jedes Steuerungssystem eine Konfigurations-Datenstruktur von dem Cloud-System erhalten, sondern kann diese auch von einem anderen Steuerungssystem erhalten, z. B. wenn das Cloud-System belastet wird oder das Cloud-System keine passende Konfigurations-Datenstruktur zur Verfügung stellen kann.

In einem weiteren Aspekt ist eine Benutzereinheit mit der Cloud-Recheneinheit des Cloud-Systems verbunden, über welche das Cloud-System Nutzereingaben von einem Benutzer enthält und darauf basierend die erste Konfigurations-Datenstruktur erzeugt. Die Nutzereingaben können von der Cloud-Recheneinheit verwendet werden, um die Cloud-Komponente oder die System-Komponente der ersten Konfigurations-Datenstruktur zu modifizieren, bevor die erste Konfigurations-Datenstruktur verteilt wird.

Erfindungsgemäß ist auch eine Datenbank in der Automatisierungsanlage eingebunden, damit die Cloud-Recheneinheit Einträge von der Datenbank verwendet, um eine Konfigurations-Datenstruktur zu modifizieren. Die Datenbank ist hierbei in dem Cloud-System ausgebildet.

Wie oben beschrieben lässt sich sowohl das Erzeugen als auch das Verteilen von Konfigurations-Datenstrukturen sehr flexibel gestalten. Mit dem Einsatz der vorliegenden Erfindung wird ein redundantes Erzeugen von Konfigurationsdaten ähnlicher Steuerungssysteme vermieden. Ferner steigt die Flexibilität und Sicherheit der gesamten Automatisierungsanlage, da ein Steuerungssystem nicht nur von dem Cloud-System, sondern auch von einem anderen Steuerungssystem eine Konfigurations-Datenstruktur erhalten kann.

In einem weiterführenden Ausführungsbeispiel führt ein Steuerungssystem eine System-Funktion aus, während das Steuerungssystem im Betrieb ist. Bei der Ausführung der System-Funktion können Prozessdaten erzeugt und an das Cloud-System weitergeleitet werden, um von der Cloud-Recheneinheit ausgewertet zu werden. Nach der Auswertung erzeugt die Cloud-Recheneinheit Eingabedaten und schickt sie als eine Antwort an das Steuerungssystem.

Ferner kann das Verteilen einer Konfigurations-Datenstruktur an ein Steuerungssystem automatisiert werden, z. B. durch eine eindeutige Kennung jedes Steuerungssystems und eine Zuordnung zwischen der eindeutigen Kennung und einer passenden Konfigurations-Datenstruktur. Beispielsweise kann, wenn das erste Steuerungssystem an die Automatisierungsanlage angeschlossen wird, das Steuerungssystem eine eindeutige Kennung an das Cloud-System, das zweite Steuerungssystem oder ein sonstiges Steuerungssystem, das mit dem ersten Steuerungssystem über das Netzwerk verbunden ist, senden. Das Cloud-System, das zweite Steuerungssystem oder das sonstige Steuerungssystem prüft dann, ob eine Konfigurations-Datenstruktur in einem eigenen Speicher vorhanden ist, die der eindeutigen Kennung des ersten Steuerungssystems entspricht. Wenn eine der eindeutigen Kennung des ersten Steuerungssystems entsprechende Konfigurations-Datenstruktur vorhanden ist, wird diese Konfigurations-Datenstruktur an das erste Steuerungssystem verschickt.

Die vorliegende Erfindung stellt ferner ein Verfahren zum Konfigurieren eines ersten Steuerungssystems in einer Automatisierungsanlage bereit. Das erste Steuerungssystem empfängt eine erste Konfigurations-Datenstruktur von einem Cloud-System oder einem zweiten Steuerungssystem. Ferner umfasst die Konfigurations-Datenstruktur eine Cloud-Komponente und eine System-Komponente wie oben beschrieben.

Die System-Komponente der ersten Konfigurations-Datenstruktur wird von dem ersten Steuerungssystem übernommen, wodurch das erste Steuerungssystem konfiguriert wird. Weiterhin kann das erste Steuerungssystem die Cloud-Komponente der ersten Konfigurations-Datenstruktur in einem Speicher ablegen, um die Cloud-Komponente später zum Erzeugen einer neuen (einer zweiten) Konfigurations-Datenstruktur zu verwenden.

### 4. Kurze Beschreibung der Figuren

Im Folgenden werden bevorzugte Ausführungsformen, Aspekte und Ausführungsbeispiele der vorliegenden Erfindung unter Bezugnahme auf die begleitenden Figuren erläutert:
- Fig. 1: zeigt eine schematische Anordnung mit einer Benutzereinheit, einem Cloud System und drei Steuerungssystemen einer Automatisierungsanlage nach einem Ausführungsbeispiel der vorliegenden Erfindung;
- Fig. 2: zeigt einen schematischen Aufbau einer Konfigurations-Datenstruktur nach einem Ausführungsbeispiel der vorliegenden Erfindung;
- Fig. 3: zeigt eine beispielhafte Konfigurations-Datenstruktur für ein Steuerungssystem im Bereich der Gebäudeautomation nach einem Ausführungsbeispiel der vorliegenden Erfindung.

### 5. Beschreibung bevorzugter Ausführungsformen

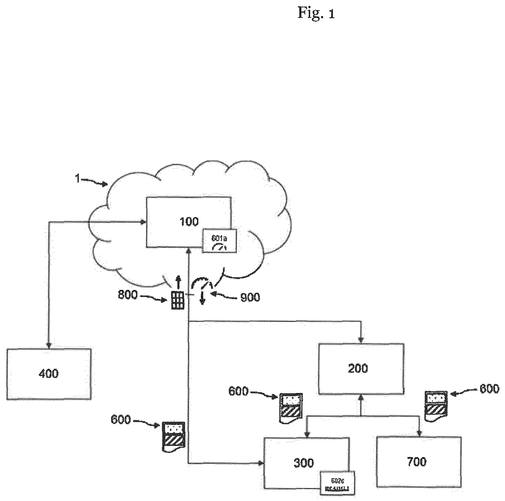

**Fig. 1** zeigt eine schematische Anordnung mit einer Benutzereinheit 400, einem Cloud System 1 und drei Steuerungssystemen 200, 300 und 700 einer Automatisierungsanlage nach einem Ausführungsbeispiel der vorliegenden Erfindung. Die Steuerungssysteme 200, 300 und 700 können auch als Steuer-/Datensammeleinheiten bezeichnet werden, weil neben Steuerungsfunktionen sie zusätzlich noch Datensammelfunktionen aufweisen. Das Cloud-System 1 umfasst eine Cloud-Recheneinheit 100. Weiterhin kann das Cloud-System 1 eine Speicher-/ Data-Management-Einheit, eine Anzeigeeinheit, eine Benutzerverwaltungseinheit, und / oder eine Device-Management-Einheit, etc. (nicht gezeigt) aufweisen.

Das Cloud-System 1 befindet sich beispielsweise in einer internen Cloud-Infrastruktur und / oder einer externen Cloud-Infrastruktur.

Das Cloud-System 1 ist über ein Netzwerk mit einer Benutzereinheit 400 verbunden. Die Benutzereinheit 400 kann beispielsweise ein PC oder ein mobiles Endgerät mit Webbrowser und / oder einer spezifischen Applikation sein, welche einen Zugriff auf das Cloud-System 1 ermöglichen. Das Netzwerk kann sowohl drahtgebunden und / oder drahtlos sein.

Des Weiteren verbindet das Netzwerk die Steuerungssysteme 200, 300 und 700 mit dem Cloud-System 1. In diesem Beispiel sind drei Steuerungssysteme der Automatisierungsanlage angezeigt, um die entsprechenden Funktionalitäten zu erläutern. Es versteht sich jedoch von selbst, dass die Anzahl von Steuerungssystemen in einer Automatisierungsanlage beliebig sein kann, genauer gesagt kann die Anzahl zwischen 1 und N legen, wobei N eine Ganzzahl größer als 1 ist. Zusätzlich ist das Steuerungssystem 200 auch mit den Steuerungssystemen 300 und 700 über das Netzwerk verbunden.

Ferner zeigt Fig. 1, dass die Cloud-Recheneinheit 100 eine Konfigurations-Datenstruktur 600 (nachfolgend auch als Cloud-Template bezeichnet) an das Steuerungssystem 200 oder 300 schicken kann. Das Steuerungssystem 200 kann auch eine Konfigurations-Datenstruktur 600 an das Steuerungssystem 300 oder 700 schicken, und das Steuerungssystem 200 oder 300 kann wiederum eine Konfigurations-Datenstruktur 600 an das Cloud-System 1 schicken. Mit dem vorliegenden Aufbau kann das Steuerungssystem 200 eine Konfigurations-Datenstruktur 600 von der Cloud-Recheneinheit 100 erhalten und weiter an das Steuerungssystem 300 oder 700 schicken, d. h. das Steuerungssystem 200 fungiert in diesem Fall als ein Gateway zwischen der Cloud-Recheneinheit 100 und anderen Steuerungssystemen. Zusätzlich schickt das Steuerungssystem 200, 300 oder 700 Prozessdaten 800 an die Cloud-Recheneinheit 100, wobei die Prozessdaten 800 von der Cloud-Recheneinheit 100 ausgewertet werden. Danach schickt die Cloud-Recheneinheit 100 Eingabedaten 900 an das Steuerungssystem 200, 300 oder 700 in Reaktion auf die Auswertung der Prozessdaten 800. Ferner können Eingabedaten 900 auch z. B. durch einen Klick auf einen Button in einem Dashboard, etc. erzeugt werden.

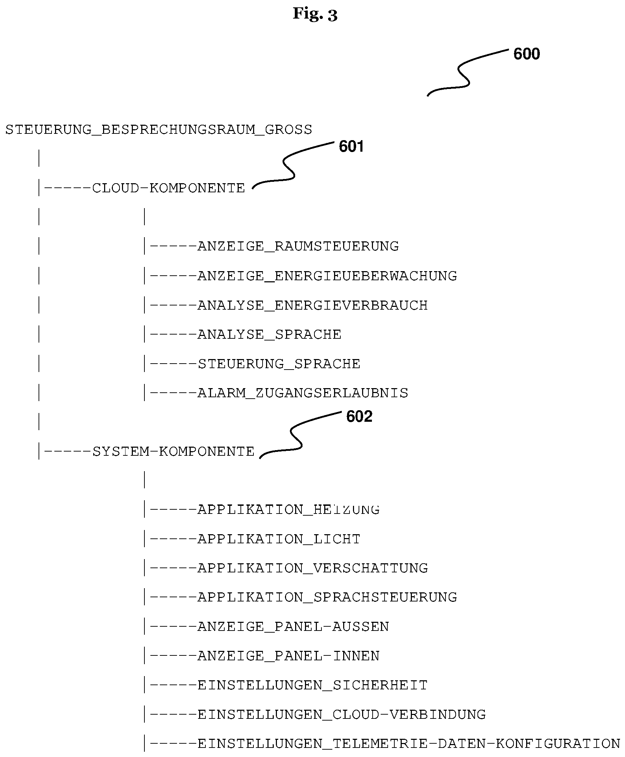

Diese verschiedenen Szenarien werden nachfolgend mit einem konkreten Beispiel der Konfigurations-Datenstruktur 600 in Fig. 3 noch genauer beschrieben, nachdem der Aufbau der Konfigurations-Datenstruktur 600 näher erläutert wird.

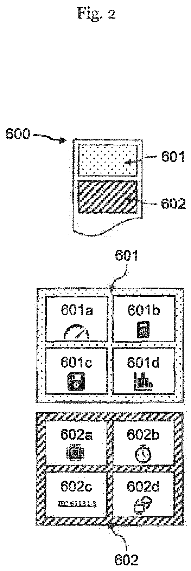

Wie in **Fig. 2** gezeigt, umfasst eine Konfigurations-Datenstruktur 600 (Cloud-Template) gemäß einer Ausführungsform eine Cloud-Komponente 601 und eine System-Komponente 602. Dieser modulare Aufbau des Cloud-Templates ist in manchen Ausführungsformen bevorzugt, es sei jedoch angemerkt, dass Aspekte der vorliegenden Erfindung auch mit anders strukturierten Cloud-Templates funktionieren können.

Die Cloud-Komponente 601 weist wenigstens eine Cloud-Funktion 601a, 601b, 601c und /oder 601d auf, die auf dem Cloud-System 1 ausgeführt werden kann.

Die Cloud-Funktion 601a beinhaltet ein Zeigerelement z. B. zur Anzeige eines Gesamtstromverbrauchs eines Gebäudes zur Verwendung innerhalb eines Dashboards.

Durch die Cloud-Funktion 601b können Konfigurationen für eine Aggregatbildung (z. B. Berechnungsformel zur Erzeugung einer Summe des Gesamtstromverbrauchs eines Gebäudes) bearbeitet werden.

Durch die Cloud-Funktion 601c können Konfigurationen hinsichtlich einer Speicherung der Prozessdaten (z. B. bzgl. Speicherort und Speicherdauer in der Cloud) bearbeitet werden.

Durch die Cloud-Funktion 601d wird ein Balkendiagramm (z. B. zur Anzeige des Verlaufs der Raumtemperatur) zur Verwendung innerhalb eines Dashboards zur Verfügung gestellt.

Ferner umfasst die Cloud-Komponente 601 insbesondere Einstellungen, Konfigurationen, Inhalte, etc., welche für die Anzeige von Daten hinsichtlich der Steuerungssysteme auf der Cloud-Seite benötigt werden. Hierzu zählen insbesondere Konfigurationsdaten (Anzeigenamen, Datenformatierungen, Einheiten, Schwellwerte), Berechtigungen, vordefinierte Visualisierungen die mit Datenpunkten verbunden sind (z. B. SVG-Widgets), statistische Auswertungen (z. B. zeitliche Vergleiche von Werten), Device-Status, Device-Metainformationen, Alarmkonfigurationen, Konfigurationen der Aggregatbildungen, Definitionen von zusätzlichen Berechnungen, Berechtigungen von Anwendern, Algorithmen zur Datenanalyse, zusätzliche Attribute, Datenexportdefinitionen, VPN-Konfigurationen, Backup- / Restore-Informationen, Diagnose-Informationen und Regeln (z. B. IFTTT ("if this then that")-Regeln).

Die System-Komponente 602 weist wenigstens eine System-Funktion 602a, 602b, 602c und /oder 602d auf, die auf einem Steuerungssystem 200, 300 oder 700 ausgeführt werden kann.

Die System-Funktion 602a stellt Informationen hinsichtlich einer spezifischen Firmwareversion zur Verfügung.

Durch die System-Funktion 602b können Konfigurationen bzgl. der Datensammelfrequenz und der Datenübertragungsfrequenz bearbeitet werden.

Die System-Funktion 602c ist ein SPS-Programm z B. zur Steuerung eines Besprechungsraums.

Die System-Funktion 602d stellt Verbindungsinformationen zur Cloud (z. B. bestehend aus einem Aktivierungsschlüssel und einer Gerätekennung) zur Verfügung.

Ferner umfasst die System-Komponente 602 insbesondere Einstellungen und Konfigurationen, welche direkt in den Steuerungssystemen benötigt werden. Hierzu zählen insbesondere Informationen über die Datensammelfrequenz, die Datenübertragungsfrequenz und die Übertragungsart (z.B. Telemetrie (=zyklisch), Event (=Alarm), Value Change (=Wertänderung)). Auch Informationen über die Art der gesendeten Daten (z. B. Rohdaten, Aggregate oder über das Format und die zugehörigen Einheiten der Daten) können Bestandteile sein. SPS-Programme z. B. mit festgelegten Funktionen wie "Brandschutztüren schließen", "Verschattung hochfahren bei Windstärke 1", Visualisierungskomponenten und Firmwareversionen können ebenso in der System-Komponente 602 enthalten sein, sowie Backup- und Diagnose-Einstellungen. Auch Einstellungen, ob die Daten komprimiert oder unkomprimiert gesendet werden sollen, oder Einstellungen hinsichtlich möglicher Voraggregationen oder Filterungen von Daten, Skalierung- und Umrechnung von Werten, etc. können in der System-Komponente 602 enthalten sein. Ferner können mittels der System-Komponente 602 Änderungen am SPS-Programm vorgenommen werden z. B. welche Daten gesendet werden sollen oder die Konfiguration des SPS-Programms. Auch Informationen über angebundene Sensorik / Aktorik können Bestandteile sein.

Die Cloud-Recheneinheit 100 kann eine Konfigurations-Datenstruktur 600 generieren, ändern, kopieren, und / oder speichern. Durch Nutzereingaben über die Benutzereinheit 400 kann die Cloud-Recheneinheit 100 eine System-Funktionen 602a, 602b, 602c oder 602d in einer System-Komponente 602 hinzufügen oder eine bestehende System-Funktion 602a, 602b, 602c oder 602d in der System-Komponente editieren / ändern, um eine neue Konfigurations-Datenstruktur (600) zu erzeugen / generieren, oder um eine bestehende Konfigurations-Datenstruktur (600) zu editieren / ändern.

Weiterhin kann die Cloud-Recheneinheit 100 durch Nutzereingaben über die Benutzereinheit 400 eine Cloud-Funktion 601a, 601b, 601c oder 601d in einer Cloud-Komponente 601 hinzufügen oder eine bestehende Cloud-Funktion 601a, 601b, 601c oder 601d in der Cloud-Komponente 601 editieren / ändern, um eine neue Konfigurations-Datenstruktur 600 zu erzeugen / generieren, oder um eine bestehende Konfigurations-Datenstruktur 600 zu editieren / ändern.

Zusätzlich kann eine Datenbank mit der Cloud-Recheneinheit 100 eingebunden werden und die Cloud-Recheneinheit 100 kann Einträge in der Datenbank anwenden, um eine System-Funktionen 602a, 602b, 602c oder 602d in einer System-Komponente 602 hinzufügen / zu ändern oder eine Cloud-Funktion 601a, 601b, 601c oder 601d in einer Cloud-Komponente 601 hinzufügen / zu ändern. Die Datenbank kann in der Cloud, in einem Steuerungssystem oder in einem beliebigen anderen Speicher ausgebildet sein.

Weiterhin fungiert das Steuerungssystem 200 als ein Gateway und leitet die Konfigurations-Datenstruktur 600 von der Cloud-Recheneinheit 100 weiter an das Steuerungssystem 300 und / oder 700. Andernfalls ist es auch möglich, dass das Steuerungssystem 200 von sich selbst eine Konfigurations-Datenstruktur 600 erzeugt und diese wird an das Steuerungssystem 300 und / oder 700 gesendet.

In einem weiteren Beispiel (nicht in Fig. 1 gezeigt) wird das Steuerungssystem 200 bereits konfiguriert und das Steuerungssystem 200 erzeugt eine System-Komponente 602 basierend auf einer eignen Konfiguration. Diese System-Komponente 602 werden weiter an das Cloud-System 1 geschickt, welche von der Cloud-Recheneinheit 100 bearbeitet werden können, um eine neue Konfigurations-Datenstruktur 600 zu erzeugen, wobei ein Benutzer über die Benutzereinheit 400 Parameter der System-Komponente 602 ändern kann, bevor die neue Konfigurations-Datenstruktur 600 erzeugt wird.

In noch einem weiteren Beispiel wird das Steuerungssystem 300 konfiguriert und das Steuerungssystem 300 erzeugt eine neue Konfigurations-Datenstruktur 600 basierend auf einer eignen Konfiguration und einer Cloud-Komponente 601 einer vorher erhaltenen Konfigurations-Datenstruktur 600. Diese neue Konfigurations-Datenstruktur 600 wird weiter an die Cloud-Recheneinheit 100 geschickt, welche z. B. direkt in einem Speicher des Cloud-Systems 1 abgelegt oder weiter an ein beliebiges Steuerungssystem verteilt werden kann. Auch ist es möglich, dass ein Benutzer über die Benutzereinheit 400 Parameter der von dem Steuerungssystem 300 geschickten Konfigurations-Datenstruktur 600 ändert, bevor die Konfigurations-Datenstruktur 600 im Speicher des Cloud-Systems 1 abgelegt oder an ein beliebiges Steuerungssystem verteilt wird.

Die Verteilung einer Konfigurations-Datenstruktur 600 kann von der Cloud-Recheneinheit 100 aus mittels Anweisungen erfolgen, die von einem Benutzer über die Benutzereinheit 400 eingegeben werden.

Ferner ist auch eine automatische Übertragung von Konfigurations-Datenstrukturen 600 ohne Anweisungen über die Benutzereinheit 400 möglich. Die automatische Übertragung von Konfigurations-Datenstrukturen 600 kann sowohl autark zwischen den einzelnen Steuerungssystemen erfolgen, sobald ein gleiches oder ähnliches Steuerungssystem an das Netzwerk angeschlossen wird oder aber auch über die Cloud-Recheneinheit 100. Hierbei sendet das neu angeschlossene Steuerungssystem eine eindeutige Kennung an die Cloud-Recheneinheit 100. In der Cloud-Recheneinheit 100 erfolgt ein Abgleich der eindeutigen Kennung mit den hinterlegten Konfigurations-Datenstrukturen. Bei einer Übereinstimmung erfolgt die automatische Zuweisung der passenden Konfigurations-Datenstruktur 600 zu dem entsprechenden Steuerungssystem. Andernfalls kann das neu angeschlossene Steuerungssystem eine eindeutige Kennung z. B. an das Steuerungssystem 200 senden. Im Steuerungssystem 200 erfolgt dann ein Abgleich der eindeutigen Kennung mit den hinterlegten Konfigurations-Datenstrukturen.

Die Konfigurations-Datenstruktur 600 kann insbesondere für einen bestimmten Anwendungsfall geeignet sein, beispielsweise für ein Steuerungssystem im Kontext von Aufgaben in Bürogebäuden, in Discountern, in der Wasseraufbereitung, in der industriellen Automation, etc. Ein konkretes Anwendungsbeispiel wird nachfolgend mit Bezugnahme auf Fig. 3 beschrieben.

**Fig. 3** zeigt eine beispielhafte Konfigurations-Datenstruktur 600 für ein Steuerungssystem 200, 300 oder 700 in Verbindung mit einem Cloud-System 1. Erfindungsgemäß enthält die Konfigurations-Datenstruktur 600 eine Cloud-Komponente 601 und eine System-Komponente 602. Die Konfigurations-Datenstruktur 600 ist in diesem Beispiel für ein Steuerungssystem 200, 300 oder 700 im Bereich der Gebäudeautomation vorgesehen. Genauer geht es um ein Steuerungssystem 200, 300 oder 700, welches eine intelligente und effiziente Nutzung eines Besprechungsraums ermöglicht.

Nachfolgend wird ein konkretes Anwendungsbeispiel beschrieben.

Die Cloud-Komponente 601 enthält unter anderem Cloud-Funktionen, welche für das Bedienen und Beobachten eines Steuerungssystems ausgelegt sind. Die Cloud-Funktionen können auf der Cloud-Recheneinheit 100 ausgeführt werden. Wie in Fig. 3 gezeigt weist die Cloud-Komponente 601 die folgenden Funktionen auf:
DASHBOARD_ROOM-CONTROL, die z. B. ein entferntes Bedienen einer Heizung des Besprechungsraums über ein grafisches Dashboard ermöglicht, wobei das grafische Dashboard über die Benutzereinheit 400 zugreifbar ist, und neben der Temperaturregelung auch einen Einblick über die aktuelle Ist-Temperatur zur Verfügung stellt;
DASHBOARD_ENERGY-MONITORING, die ein weiteres grafisches Dashboard zur Verfügung stellt, um einen Zugriff auf ein Energie-Monitoring im Kontext des Besprechungsraums zu ermöglichen;
ANALYTIC_ENERGY-CONSUMPTION, die eine Grundlage der Cloud-Funktion DASHBOARD_ENERGY-MONITORING bereitstellt, welche Prozessdaten 800 von dem Steuerungssystem 200, 300 oder 700 erhält, diese analysiert und somit eine Aussage über vergangene und zu erwartende Energieverbräuche machen kann;
ANALYTIC_VOICE, die eine Cloud-Funktion zur Analyse der Sprachbefehle ist, welche durch eine System-Funktion in Form von Prozessdaten 800 an die Cloud-Recheneinheit 100 weitergeleitet werden;
COMMAND_VOICE, die eine Übertragung eines entsprechenden Steuerungsbefehls in Form von Eingabedaten 900 zurück an das Steuerungssystem 200, 300 oder 700 ermöglicht, nachdem die Sprachbefehle durch die Cloud-Funktion ANALYTIC_VOICE ausgewertet wird;
ALARM_ACCESS_AUTHORISATION, die eine automatische Alarmierung bei unberechtigtem Zutritt in den Besprechungsraum ermöglicht, wobei die Cloud-Funktion ALARM_ACCESS_AUTHORISATION in diesem Fall eine Benachrichtigung definierter Personen mittels Mail, Anruf, SMS, etc ermöglicht.

Die System-Komponente 602 enthält unter anderem System-Funktionen, die auf einem Steuerungssystem ausgeführt werden. Wie in Fig. 3 gezeigt weist die System-Komponente 602 die folgenden System-Funktionen auf:
APPLICATION_HEATING, die eine Steuerung einer Heizung ermöglicht;
APPLICATION_LIGHT, die eine Steuerung einer Beleuchtung ermöglicht;
APPLICATION_SHADOWING, die eine Steuerung einer Verschattung ermöglicht;
APPLICATION _VOICE-CONTROL, die eine Eingabe von Sprachbefehlen und deren Weiterleitung in Form von Prozessdaten 800 an die Cloud-Recheneinheit 100 ermöglicht;
VISUALISATION_PANEL-OUTSIDE zur Visualisierung von Raumfunktionen auf Bildschirmen vor einem Besprechungsraum;
VISUALISATION_PANEL-INSIDE zur Visualisierung von Raumfunktionen auf Bildschirmen innerhalb des Besprechungsraums;
SETTINGS_SECURITY, die Security-Einstellungen wie Firewall, Zugriffsrechte, etc. für ein Steuerungssystem ermöglicht;
SETTINGS_CLOUND-CONNECTIVITY, die Einstellungen hinsichtlich der Kommunikation zwischen dem Steuerungssystem und dem Cloud-System 1 ermöglicht; und
SETTINGS_TELEMETRY-DATA-CONFIGURATION zum Beschreiben von Daten, die vom Steuerungssystem übertragen werden (z. B. bzgl. des Datentyps, Messwert-Einheit).

### 6. Liste der Bezugszeichen

- 1: Cloud-System
- 100: Cloud-Recheneinheit (zweiter Teilnehmer)
- 200: Steuerungssystem (zweiter Teilnehmer)
- 300/700: Steuerungssystem (erster Teilnehmer)
- 400: Benutzereinheit
- 600: Konfigurations-Datenstruktur (Cloud-Template)
- 601: Cloud-Komponente
- 601a-d: Cloud-Funktion
- 602: System-Komponente
- 602a-d: System-Funktion
- 800: Prozessdaten
- 900: Eingabedaten

## Patentansprüche

1. Verfahren zum Konfigurieren eines ersten Steuerungssystems (300, 700) einer Automatisierungsanlage, umfassend die folgenden Schritte:
Erzeugen einer ersten Konfigurations-Datenstruktur (600) für einen ersten Teilnehmer (300, 700) einer Automatisierungsanlage, der ein erstes Steuerungssystem (300, 700) ist und der Steuerungsfunktionen der Automatisierungsanlage durchführt,
wobei die erste Konfigurations-Datenstruktur (600) mit einer Cloud-Komponente und einer System-Komponente zweiteilig aufgebaut ist, wobei
die Cloud-Komponente (601), wenigstens eine Cloud-Funktion (601a, 601b, 601c, 601d) aufweist, die auf einer Cloud-Recheneinheit (100) in einem Cloud-System (1) ausgeführt wird; und
die System-Komponente (602), wenigstens eine System-Funktion (602a, 602b, 602c, 602d) aufweist, die auf dem ersten Steuerungssystem (300, 700) ausgeführt wird;
wobei das Erzeugen von einem zweiten Teilnehmer (100, 200) ausgeführt wird, der die Cloud-Recheneinheit (100) ist;
Erhalten, durch die Cloud-Recheneinheit (100), einer System-Komponente (602) von einem zweiten Steuerungssystem (200), wobei das Erzeugen der ersten Konfigurations-Datenstruktur (600) für das erste Steuerungssystem (300, 700) auf der erhaltenen System-Komponente (602) basiert;
Senden, durch die Cloud-Recheneinheit (100), der ersten Konfigurations-Datenstruktur (600) an das erste Steuerungssystem (300, 700) über das zweite Steuerungssystem (200), wobei das zweite Steuerungssystem (200) als ein Gateway fungiert;
vor dem Senden der ersten Konfigurations-Datenstruktur (600), Modifizieren, durch die Cloud-Recheneinheit (100), der Cloud-Komponente (601) oder der System-Komponente (602) der ersten Konfigurations-Datenstruktur (600) basierend auf Einträgen in einer Datenbank des Cloud Systems (1);
Empfangen, durch das erste Steuerungssystem (300, 700) der ersten Konfigurations-Datenstruktur (600) von dem zweiten Steuerungssystem (200); und
Übernehmen durch das erste Steuerungssystem der System-Komponente (602) der ersten Konfigurations-Datenstruktur (600).

2. Verfahren nach Anspruch 1, ferner umfassend:
vor dem Senden der ersten Konfigurations-Datenstruktur (600), Modifizieren, durch die Cloud-Recheneinheit (100), der Cloud-Komponente (601) oder der System-Komponente (602) der ersten Konfigurations-Datenstruktur (600) basierend auf Nutzereingaben, die von einem Benutzer über eine Benutzereinheit (400) eingegeben werden.

3. Verfahren nach einem der vorherigen Ansprüche, ferner umfassend:
Erhalten, durch die Cloud-Recheneinheit (100), einer zweiten Konfigurations-Datenstruktur (600) von dem ersten Steuerungssystem (300, 700), die von dem ersten Steuerungssystem (300, 700) erzeugt wird.

4. Verfahren nach einem der vorherigen Ansprüche, ferner umfassend:
Erhalten, durch die Cloud-Recheneinheit (100), von Prozessdaten (800) von dem ersten oder zweiten Steuerungssystem (200, 300, 700);
Auswerten der Prozessdaten (800); und
Ausgeben von Eingabedaten (900) an das erste oder zweite Steuerungssystem (200, 300, 700), die mindestens eine System-Funktion (602a, 602b, 602c, 602d) in dem ersten oder zweiten Steuerungssystem (200, 300, 700) auslösen.

5. Verfahren nach einem der vorherigen Ansprüche, ferner umfassend:
Erhalten, durch den zweiten Teilnehmer (100, 200), einer Kennung von dem ersten Steuerungssystem (300, 700);
Prüfen, ob eine der Kennung entsprechende Konfigurations-Datenstruktur (600) in einem Speicher des zweiten Teilnehmers (100, 200) vorhanden ist; und
wenn eine der Kennung entsprechende Konfigurations-Datenstruktur (600) in dem Speicher vorhanden ist, Senden der entsprechenden Konfigurations-Datenstruktur (600) an das erste Steuerungssystem (300, 700).

6. Verfahren nach Anspruch 1, ferner umfassend:
Senden, durch das erste Steuerungssystem (300, 700), einer Kennung an den zweiten Teilnehmer (100, 200), wenn das erste Steuerungssystem (300, 700) an die Automatisierungsanlage angeschlossen wird.

## Claims

1. A method for configuring a first control system (300, 700) of an automation system, comprising the following steps:
Generating a first configuration data structure (600) for a first participant (300, 700) of an automation system, which is a first control system (300, 700) and which performs control functions of the automation system,
wherein the first configuration data structure (600) is formed in two parts: a cloud component and a system component, wherein
the cloud component (601) comprises at least one cloud function (601a, 601b, 601c, 601d) that is executed on a cloud computing unit (100) in a cloud system (1); and
the system component (602) comprises at least one system function (602a, 602b, 602c, 602d) that is executed on the first control system (300, 700);
wherein the generation is performed by a second participant (100, 200), which is the cloud computing unit (100);
receiving, by the cloud computing unit (100), a system component (602) from a second control system (200), wherein the generation of the first configuration data structure (600) for the first control system (300, 700) is based on the received system component (602);
sending, by the cloud computing unit (100), the first configuration data structure (600) to the first control system (300, 700) via the second control system (200), wherein the second control system (200) acts as a gateway;
prior to sending the first configuration data structure (600), modifying, by the cloud computing unit (100), the cloud component (601) or the system component (602) of the first configuration data structure (600) based on entries in a database of the cloud system (1);
Receiving, by the first control system (300, 700), the first configuration data structure (600), from the second control system (200); and
Adopting, by the first control system, the system component (602) of the first configuration data structure (600).

2. The method according to claim 1, further comprising:
prior to sending the first configuration data structure (600), modifying, by the cloud computing unit (100), the cloud component (601) or the system component (602) of the first configuration data structure (600) based on user inputs entered by a user via a user unit (400).

3. The method according to any of the preceding claims, further comprising:
receiving, by the cloud computing unit (100), a second configuration data structure (600) from the first control system (300, 700), which is generated by the first control system (300, 700).

4. The method according to any of the preceding claims, further comprising:
receiving, by the cloud computing unit (100), process data (800) from the first or second control system (200, 300, 700);
evaluating the process data (800); and
outputting input data (900) to the first or second control system (200, 300, 700), which trigger at least one system function (602a, 602b, 602c, 602d) in the first or second control system (200, 300, 700).

5. The method according to any one of the preceding claims, further comprising:
receiving, by the second participant (100, 200), an identifier from the first control system (300, 700);
checking whether a configuration data structure (600) corresponding to the identifier is present in a memory of the second participant (100, 200); and
if a configuration data structure (600) corresponding to the identifier is present in the memory, sending the corresponding configuration data structure (600) to the first control system (300, 700).

6. The method according to claim 1, further comprising:
sending, by the first control system (300, 700), an identifier to the second participant (100, 200), when the first control system (300, 700) is connected to the automation system.

## Revendications

1. Procédé de configuration d'un premier système de commande (300, 700) d'une installation d'automatisation, comprenant les étapes suivantes :
la génération d'une première structure de données de configuration (600) pour un premier abonné (300, 700) d'une installation d'automatisation qui est un premier système de commande (300, 700) et met en œuvre des fonctions de commande de l'installation d'automatisation,
dans lequel la première structure de données de configuration (600) est élaborée en deux parties avec un composant cloud et un composant système, dans lequel le composant cloud (601) présente au moins une fonction cloud (601a, 601b, 601c, 601d), qui est exécutée sur une unité de calcul cloud (100) dans un système cloud (1) ; et
le composant système (602) présente au moins une fonction de système (602a, 602b, 602c, 602d) qui est exécutée sur le premier système de commande (300, 700) ;
dans lequel la génération est exécutée par un deuxième abonné (100, 200) qui est l'unité de calcul cloud (100) ;
l'obtention, par l'unité de calcul cloud (100), d'un composant système (602) d'un deuxième système de commande (200), dans lequel la génération de la première structure de données de configuration (600) pour le premier système de commande (300, 700) est basée sur le composant système (602) obtenu ;
l'envoi, par l'unité de calcul cloud (100), de la première structure de données de configuration (600) au premier système de commande (300, 700) par l'intermédiaire du deuxième système de commande (200), dans lequel le deuxième système de commande (200) agit comme une passerelle ;
avant l'envoi de la première structure de données de configuration (600), la modification, par l'unité de calcul cloud (100), du composant cloud (601) ou du composant système (602) de la première structure de données de configuration (600) sur la base d'entrées dans une base de données du système de cloud (1) ;
la réception, par le premier système de commande (300, 700), de la première structure de données de configuration (600) du deuxième système de commande (200) ; et
la prise en charge par le premier système de commande du composant système (602) de la première structure de données de configuration (600).

2. Procédé selon la revendication 1, comprenant en outre :
avant l'envoi de la première structure de données de configuration (600), la modification, par l'unité de calcul cloud (100), du composant cloud (601) ou du composant système (602) de la première structure de données de configuration (600) sur la base d'entrées utilisateur qui sont entrées par un utilisateur par l'intermédiaire d'une unité utilisateur (400).

3. Procédé selon l'une des revendications précédentes, comprenant en outre :
l'obtention, par l'unité de calcul cloud (100), d'une deuxième structure de données de configuration (600) du premier système de commande (300, 700), qui est générée par le premier système de commande (300, 700).

4. Procédé selon l'une des revendications précédentes, comprenant en outre :
l'obtention, par l'unité de calcul cloud (100), de données de processus (800) du premier ou du deuxième système de commande (200, 300, 700) ;
l'évaluation des données de processus (800) ; et
la fourniture de données d'entrée (900) au premier ou au deuxième système de commande (200, 300, 700), qui déclenchent au moins une fonction système (602a, 602b, 602c, 602d) dans le premier ou le deuxième système de commande (200, 300, 700).

5. Procédé selon l'une des revendications précédentes, comprenant en outre :
l'obtention, par le deuxième abonné (100, 200), d'un identifiant du premier système de commande (300, 700) ;
la vérification si une structure de données de configuration (600) correspondant à l'identifiant est présente dans une mémoire du deuxième abonné (100, 200) ; et
si une structure de données de configuration (600) correspondant à l'identifiant est présente dans la mémoire, l'envoi de la structure de données de configuration (600) correspondante au premier système de commande (300, 700).

6. Procédé selon la revendication 1, comprenant en outre :
l'envoi, par le premier système de commande (300, 700), d'un identifiant au deuxième abonné (100, 200) lorsque le premier système de commande (300, 700) est connecté à l'installation d'automatisation.
